# EUROPEAN PATENT APPLICATION

(11) **EP 1 594 048 A2**
(43) Date of publication of application: **09.11.2005**
(21) Application number: 05002209.4
(22) Date of filing: 03.02.2005
(51) Int. Cl.: G06F 9/38

(54) **Thread selection unit and method for a multithreaded processor**

(30) Priority: 06.02.2004 US 774038
(71) Applicant: Infineon Technologies AG, 81669 München (DE)
(72) Inventor: Arnold, Roger, 94087 Sunnyvale CA (US); Martin, Daniel, 94040 Mountain View CA (US); Norden, Erik, 82008 Unterhaching (DE); Ober, Robert E., 95126 San Jose CA (US)
(74) Representative: Repkow, Ines

(57) **Abstract**

A thread selection unit for a block multi-threaded processor includes a priority thread selector and an execution thread selector. The priority thread selector uses a maxtime register for each active thread to limit the time an active thread can be the priority thread. The execution thread selector is configured to select the priority thread as the execution thread when the priority thread is unblocked. However, if the priority thread is blocked, the execution thread selector selects a non-priority thread as the execution thread.

## Description

### FIELD OF THE INVENTION

The present invention relates to microprocessor systems, and more particularly to allocating processor cycles in a block multithreaded processor.

### BACKGROUND OF THE INVENTION

In multithreaded processors, the processor holds the state of several active threads, which can be executed independently. When one of the threads becomes blocked, for example due to a cache miss, another thread can be executed so that processor cycles are not wasted. If thread switching were only performed due to a thread becoming blocked, the percentage of processor cycles allotted to each thread would be nearly impossible to predict. Furthermore, the maximum time between activation of a thread would also be nearly impossible to predict.

Conventional thread switching units have been implemented using timer interrupts and progress-monitoring software in a real-time kernel. In general, the progress-monitoring software can dynamically reconfigure the thread mappings as necessary to maintain the required net allocation of processor cycles to the threads. However, this approach adds software complexity and runtime overhead. Furthermore, the runtime overhead limits the granularity of control that can be obtained by the progress monitoring software. Specifically, as the interrupt timers are set to smaller intervals, the system would spend more time responding to interrupts than actually processing the threads.

Hence there is a need for a method or system to control the thread switching in multithreaded processors so that the percentages of processors cycles can be allotted to the threads without undue overhead reducing the amount of processor cycles that can be allotted to the threads.

### SUMMARY

Accordingly, a multithreaded processor in accordance with the present invention implements thread switching in hardware to remove the software overhead of conventional thread switching systems. Furthermore, the present invention includes a novel thread allocation method of selecting a priority thread and executing the priority thread if the priority thread is not blocked. In general the priority thread is selected independently from thread execution. In one embodiment of the present invention, a set of "maxtime" registers control the maximum number of cycles a thread remains the "priority thread".

In one embodiment of the present invention the thread selection unit includes a priority thread selector configured to generate a priority thread value associated with a priority thread and an execution thread selector coupled to receive the priority thread value and to generate an execution thread value associated with an execution thread. If the priority thread is not blocked, the execution thread value is set equal to the priority thread value so that the priority thread is executed by the execution unit. However, if the priority thread is blocked, the execution thread value is set to another value so that another thread can be executed. The priority thread selector includes a maxtime register for each active thread, a priority thread counter, a comparator and a counter. The priority thread counter provides the priority thread value. The maxtime value of each thread is the number of cycles a particular thread can remain the priority thread before another thread is selected as the priority thread. The counter counts the number of cycles since the current priority thread first became the priority thread. The comparator compares the count value from the counter with the maxtime value associated with the priority thread, when the count value matches the maxtime value the counter is reset and the priority thread counter is incremented.

The present invention will be more fully understood in view of the following description and drawings.

### BRIEF DESCRIPTION OF THE DRAWINGS

Fig. 1(a) is simplified block diagram of a thread selection unit in accordance with one embodiment of the present invention.

Fig. 2 is simplified block diagram of a priority thread selector in accordance with one embodiment of the present invention.

Fig. 3 is a simplified block diagram of a priority thread selector in accordance with another embodiment of the present invention.

Fig. 4 is a simplified block diagram of a execution thread selector in accordance with one embodiment of the present invention.

Fig. 5 is a state diagram for a state machine in accordance with one embodiment of the present invention.

### DETAILED DESCRIPTION

As explained above, conventional multithreaded processors use timer interrupts and progress monitoring software to control thread switching. The software overhead associated with conventional methods is eliminated with the present invention.

In general, a multithreaded processor can have a maximum number of active threads. A priority thread PT and an execution thread ET are selected from among the active threads. For clarity, the embodiments described herein are capable of supporting N active threads numbered from 0 to N-1, and are referred to as thread 0, thread 1, ... thread N-1. Priority thread PT and execution thread ET refer to one of the active thread. For clarity a priority thread value PTV is used herein to refer to priority thread PT. Priority thread value PTV is an integer value between 0 and N-1, inclusive. Thus, priority thread PT is the same as thread PTV. Similarly, an execution thread value ETV is used herein to refer to execution thread ET. Execution thread value ETV is an integer value between 0 and N-1, inclusive.
Thus, execution thread ET is the same as thread ETV.

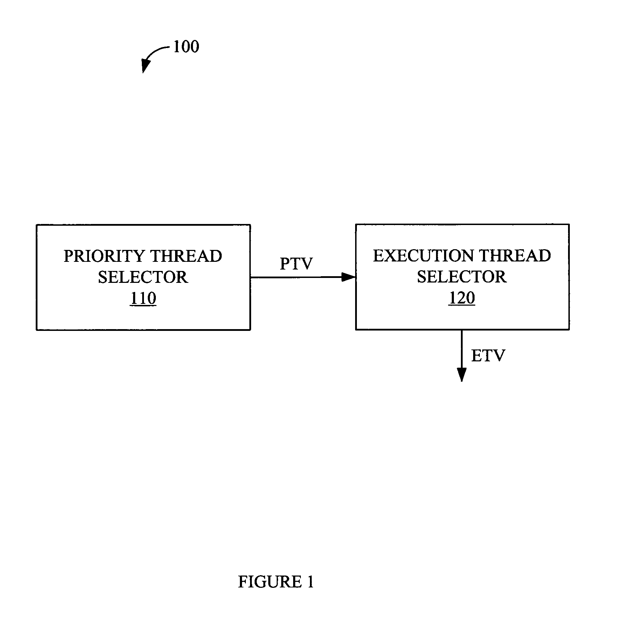

Fig. 1 is a simplified block diagram of a thread selection unit 100 in accordance with one embodiment of the present invention. Thread selection unit 100 includes a priority thread selector 110 and an execution thread selector 120. Priority thread selector 110 selects a priority thread PT for execution thread selector 120. Specifically, priority thread selector provides priority thread value PTV to execution thread selector 120. Execution thread selector 120 selects an execution thread ET, which is executed by the execution unit (not shown) based on the status of priority thread PT and the other threads. Specifically, if priority thread PT is not blocked, priority thread PT is selected as execution thread ET. However, if priority thread PT is blocked, execution thread selector 120 selects a non-priority thread as execution thread ET. Execution thread selector 120 generates execution thread value ETV to indicate which thread is the execution thread.

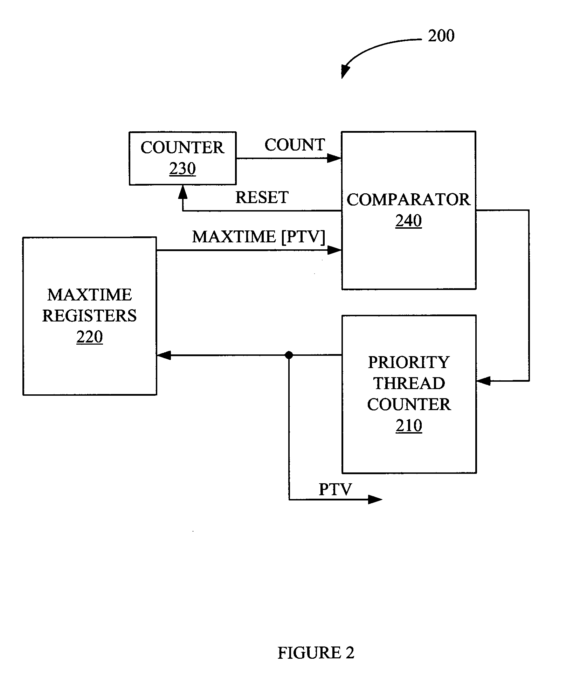

Priority thread selector 110 is used to control the allocation of processor cycles among the threads. Fig. 2 is a simplified block diagram of a priority thread selector 200 in accordance with one embodiment of the present invention.
Priority thread selector 200 includes a priority thread counter 210, a set of maxtime registers 220, a counter 230, and a comparator 240. Priority thread counter 210 is a modulo N counter and provides priority thread value PTV to maxtime registers 220 and execution thread selector 120 (Fig. 1). Comparator 240 increments priority thread counter 210 to change the priority thread as described below.

Maxtime registers 220 includes one register for each active thread. Therefore, maxtime registers 220 includes N independent registers. For clarity, each maxtime register is referred to using the notation maxtime register MT_REG[X], where X is an integer from 0 to (N-1), inclusive. Maxtime register MT_REG[X] is associated with thread X. Furthermore, the content of maxtime register MT_REG[X], is referred using the notation maxtime value MAXTIME[X]. Maxtime registers 220 provides maxtime value MAXTIME[PTV] i.e. the contents of maxtime register MT_REG[PTV] which is associated with thread PTV (priority thread PT). The content of the maxtime register determines how long the associated thread can remain the priority thread as explained below.

Counter 230 simply counts up from zero and provides a count value COUNT to comparator 240. Counter 230 can be reset via reset signal RESET from comparator 240. Comparator 240 compares maxtime value MAXTIME[PTV] with count value COUNT. If maxtime value MAXTIME[PT] is equal to COUNT, comparator 240 resets counter 230 and increments priority thread counter 210.

Thus, each thread X is selected as priority thread PT for maxtime value MAXTIME[x] cycles. By controlling the maxtime values associated with each active thread the processor cycles can be distributed between the active threads as desired. Specifically, thread X is selected as priority thread PT for 100*MAXTIME[X]/TOTAL_MT percent of the time, where TOTAL_MT is the sum of the N maxtime registers. For example in a system with 4 active threads where the processor cycle allocation should be 10%, 35%, 25%, and 30%, maxtime values MAXTIME[0], MAXTIME[1], MAXTIME[2], and MAXTIME[3] can be assigned values 10, 35, 25, and 30 respectively. Alternatively the set of maxtime values can be assigned other values in the same ratio such as 4, 14, 10, and 12.

Another benefit of the present invention, is that the interval between the time that thread X is no longer selected as priority thread PT and the time thread X is again selected as priority thread PT can be predetermined with the selection of the maxtime values. Specifically, after thread X is no longer priority thread PT, thread X will become priority thread PT again within TOTAL_MT-MAXTIME[X] cycles. This value also indicates the maximum number of processor cycles that can elapse before a thread that is ready to execute is actually executed because execution thread selector 120 selects priority thread PT as execution thread ET, if priority thread PT is not blocked.

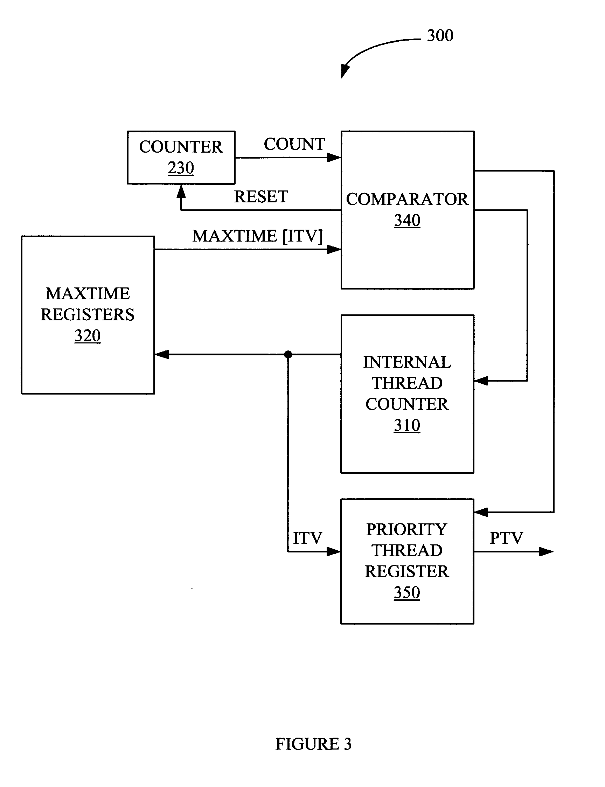

In some embodiments of the present invention, a thread can be assigned a maxtime value of zero. Threads with a maxtime value of zero are never selected as priority thread PT but may be executed when priority thread PT is blocked. Fig. 3 is a block diagram of a priority thread selector 300 that supports maxtime values of zero. Because priority thread selector 300 is very similar to priority thread selector 200, the same reference numerals are used for components that are unchanged. Thus, priority thread selector 300 includes an internal thread counter 310, maxtime registers 220, counter 230, a comparator 340 and a priority thread register 350. Internal thread counter 310 is a modulo N counter that provides an internal thread value ITV to maxtime registers 320 and priority thread register 350. Internal thread counter 310 can be incremented by comparator 340. Maxtime registers 320 provide maxtime value MAXTIME[ITV] to comparator 340.

Comparator 340 also compares maxtime value MAXTIME[ITV] to count value COUNT from counter 230. When count value COUNT is equal to maxtime value MAXTIME[ITV] comparator 340 resets counter 230 and increments internal thread counter 310. However, comparator 340 also determines whether maxtime value MAXTIME[ITV] is equal to zero. When maxtime value MAXTIME[ITV] is equal to zero, comparator 340 increments internal thread counter 310 so that thread ITV, which has a maxtime value of zero can not become priority thread PT. When maxtime value MAXTIME[ITV] is not equal to zero, comparator 340 causes priority thread register 310 to store internal thread value ITV as priority thread value PTV.

APPENDIX I provides another embodiment of a priority thread selector in accordance with the present invention implemented in pseudocode. One skilled in the art can easily convert the pseudocode to a hardware definition language such as VHDL or Verilog to create a priority thread selector in accordance with the present invention.

As stated above, execution thread selector 120 (Fig. 1), receives priority thread value PTV and generates execution thread value ETV. The function of execution thread selector 120 is governed by two basic rules. First, when thread PTV, i.e. priority thread PT, is not blocked then execution thread value ETV is set equal to priority thread value PTV so that the execution unit (not shown) executes priority thread PT. If priority thread PT is blocked, then select a non-priority thread, which is not blocked, as execution thread ET and output the selected thread value as execution thread value ETV.

The exact method of selecting a non-priority thread as execution thread ET varies among different embodiments of the present invention. For example, some embodiments may randomly select an unblocked non-priority thread as execution thread ET. Other embodiments may try to select the next closest unblocked thread relative to the priority thread as the execution thread. For example, these embodiments would check threads (PTV+1 MOD N) then thread (PTV+2 MOD N) etc. to find the next unblocked thread, which would be selected as the execution thread.

Based on the two basic rules, various conditions could cause a new thread to be selected as execution thread ET. One condition is when priority thread PT was blocked but becomes unblocked. In this situation priority thread PT should be selected as execution thread ET. Another condition is if a new priority thread is selected. If the new priority thread is not blocked, execution thread selector 120 should select the new priority thread as the execution thread. If the new priority thread is blocked, execution thread selector 120 can either keep the current execution thread as the execution thread or select a new execution thread based on the new priority thread value. If the current execution thread becomes blocked, then execution thread selector must select a new execution thread. The exact method of selecting a new execution thread in these situations may differ between different embodiments.

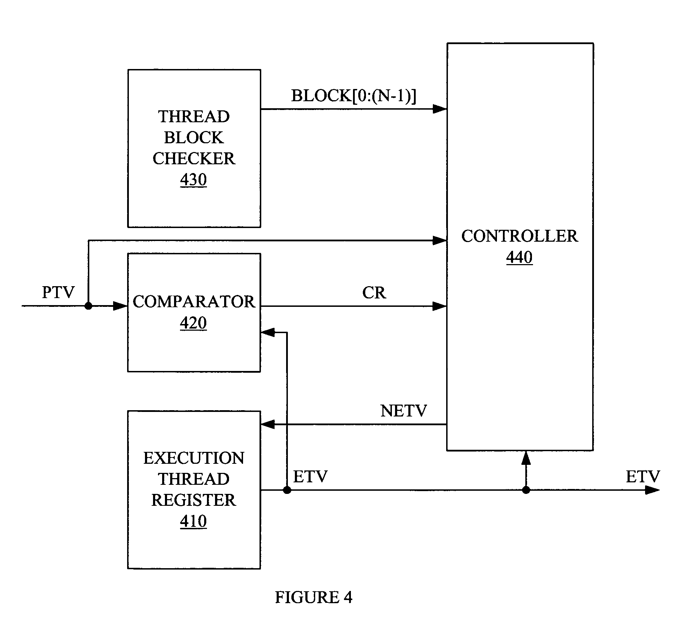

Fig. 4 is a simplified block diagram of an execution thread selector 400. Execution thread selector 400 includes an execution thread register 410, a comparator 420, a thread block checker 430 and a controller 440. Execution thread register 410 is controlled by controller 440 and provides execution thread value ETV. Comparator 420 compares priority thread value PTV and execution thread value ETV and provides a comparison result CR to controller 440. Thread block checker 430 determines whether threads are blocked or unblocked and provides block values BLOCK[0:(N-1)] for the active threads to controller 440. As used herein block value BLOCK[X], is associated with thread X. If block value BLOCK[X] is equal to 1, then thread X is blocked. If block value BLOCK[X] is equal to 0, then thread X is not blocked.

Controller 440 follows the two basic rules given above to select a new execution thread value NETV when needed and writes new execution thread value NETV into execution thread register 410.

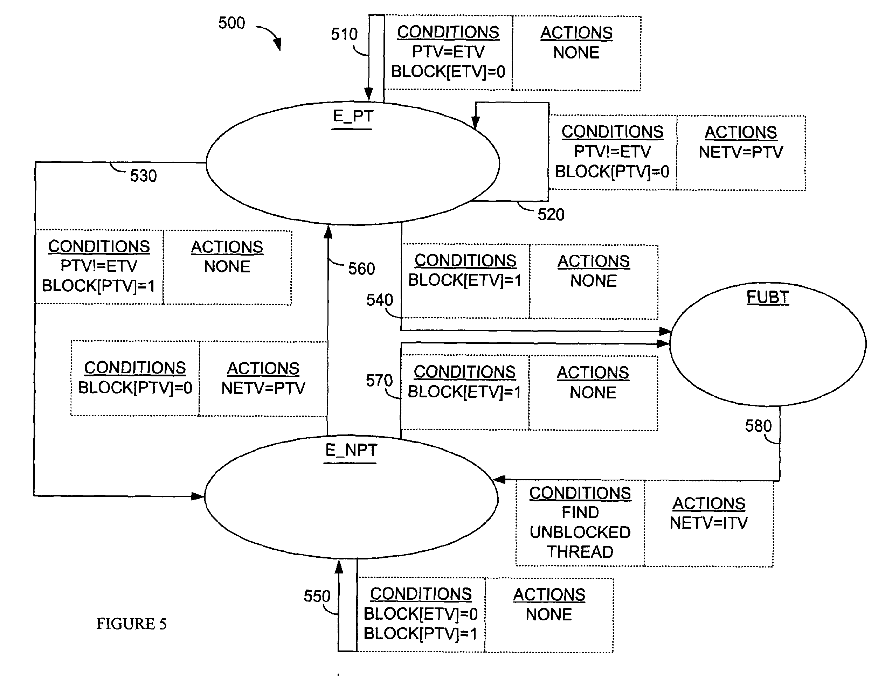

Controller 440 can be implemented using a state machine 500 as illustrated in Fig. 5. State machine 500 includes three states: executing priority thread state E_PT, executing a non-priority thread state E_NPT, and finding an unblocked thread state FUBT.

Executing priority thread state E_PT has four transition arrows 510, 520, 530, and 540. Transition arrow 510 which returns to Executing priority thread state E_PT is triggered under the conditions that priority thread value PTV is equal to execution thread value ETV and that block value BLOCK[ETV] is equal to 0. No actions are taken with transition arrow 510. Transition arrow 520 which also returns to Executing priority thread state E_PT is triggered under the conditions that priority thread value PTV is not equal to execution thread value ETV and that block value BLOCK[PTV] is equal to 0. When transition arrow 520 is triggered new execution thread value NETV is set to be equal to priority thread value PTV and stored in execution thread register 410 (Fig. 4). Transition arrow 530 which causes a transition to executing non-priority thread state E_NPT is triggered under the conditions that priority thread value PTV is not equal to execution thread value ETV and that block value BLOCK[PTV] is equal to 1. When transition arrow 520 is triggered, no actions are taken except for the transition to executing non-priority thread state E_NPT. Transition arrow 540 which causes a transition to find unblocked thread state FUBT is triggered under the conditions that that block value BLOCK[ETV] is equal to 1. When transition arrow 520 is triggered, no actions are taken except for the transition to find unblocked thread state FUBT.

In find unblocked thread state FUBT, controller 440 finds an unblocked thread. The exact method of finding an unblocked thread may vary. For the embodiment of Fig. 4 and 5, an internal thread value ITV is set equal to execution thread value ETV. Then, ITV is incremented modularly by 1 until an unblocked thread is found. Find unblocked thread state FUBT has a single transition arrow 580 to executing non-priority thread state E_NPT. Transition arrow 580 is triggered as soon as an unblocked thread is found. When transition arrow 580 is triggered, new execution thread value NETV is set to be equal to internal thread value ITV and stored in execution thread register 410 (Fig. 4).

Executing non-priority thread state E_NPT has three transition arrows 550, 560, and 570. Transition arrow 550 which returns to executing non-priority thread state E_NPT is triggered under the conditions that block value BLOCK[ETV] is equal to zero and block value BLOCK[PTV] is equal to 1. No actions are taken with transition arrow 550. Transition arrow 560 which causes a transition to executing priority thread state E_PT is triggered under the conditions that block value BLOCK[PTV] is equal to 0. When transition arrow 560 is triggered, new execution thread value NETV is set to be equal to priority thread value PTV and stored in execution thread register 410 (Fig. 4). Transition arrow 570 which causes a transition to find unblocked thread state FUBT is triggered under the conditions that that block value BLOCK[ETV] is equal to 1. When transition arrow 570 is triggered, no actions are taken except for the transition to find unblocked thread state FUBT.

APPENDIX II provides another embodiment of an execution thread selector in accordance with the present invention implemented in pseudocode. Furthermore, APPENDIX III provides another embodiment of an execution thread selector in accordance with the present invention implemented in pseudocode. One skilled in the art can easily convert the pseudocode to a hardware definition language such as VHDL or Verilog to create a execution thread selector in accordance with the present invention.

In the various embodiments of this invention, novel structures and methods have been described to fairly allocate processor cycles to various active threads. The various embodiments of the structures and methods of this invention that are described above are illustrative only of the principles of this invention and are not intended to limit the scope of the invention to the particular embodiments described. For example, in view of this disclosure, those skilled in the art can define other priority thread selectors, execution thread selectors, state machines, controllers, comparators, maxtime registers, thread block checkers, and so forth, and use these alternative features to create a method or system according to the principles of this invention. Thus, the invention is limited only by the following claims.

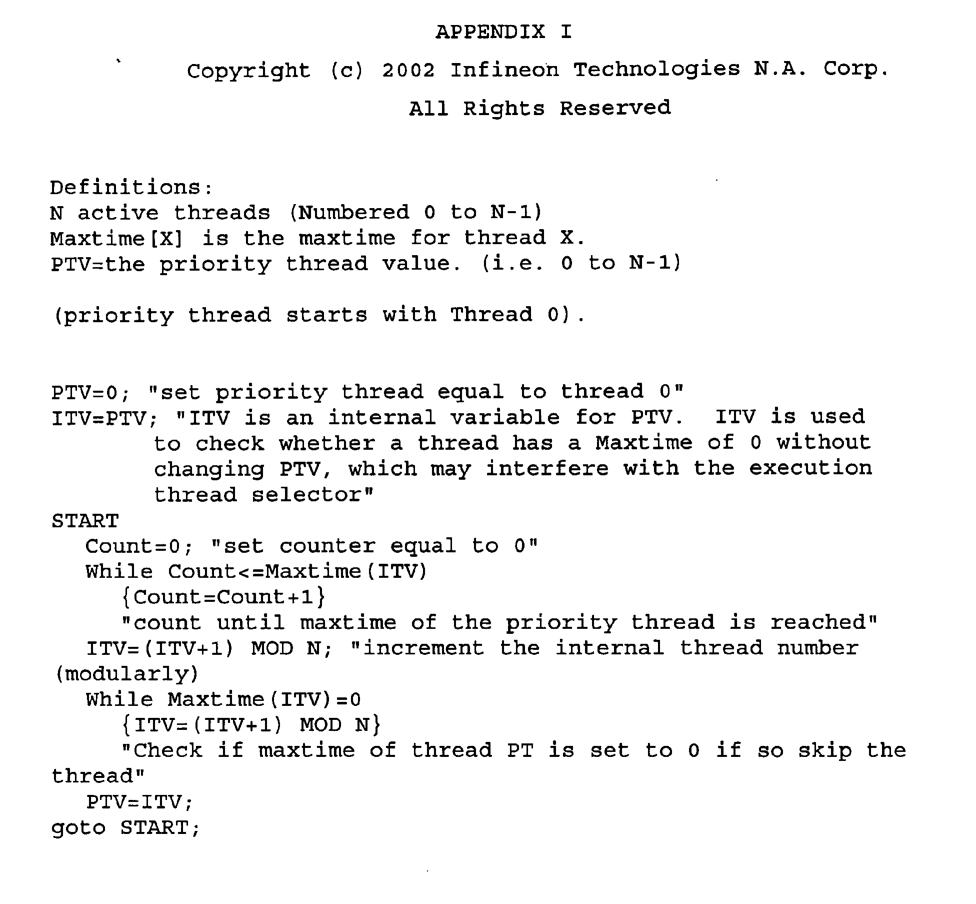

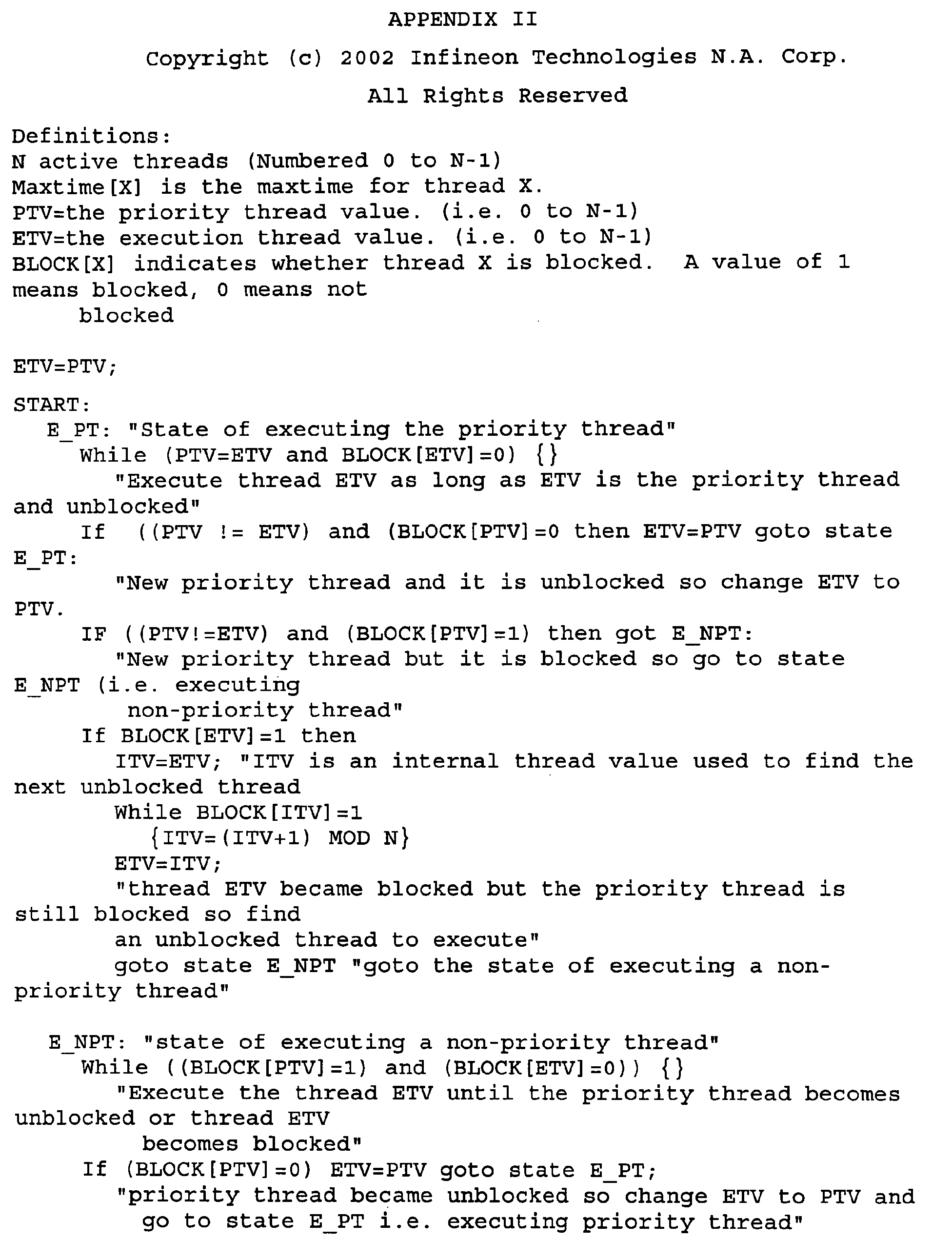

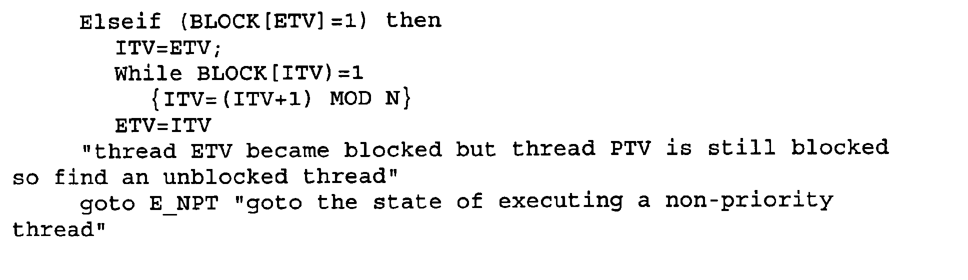

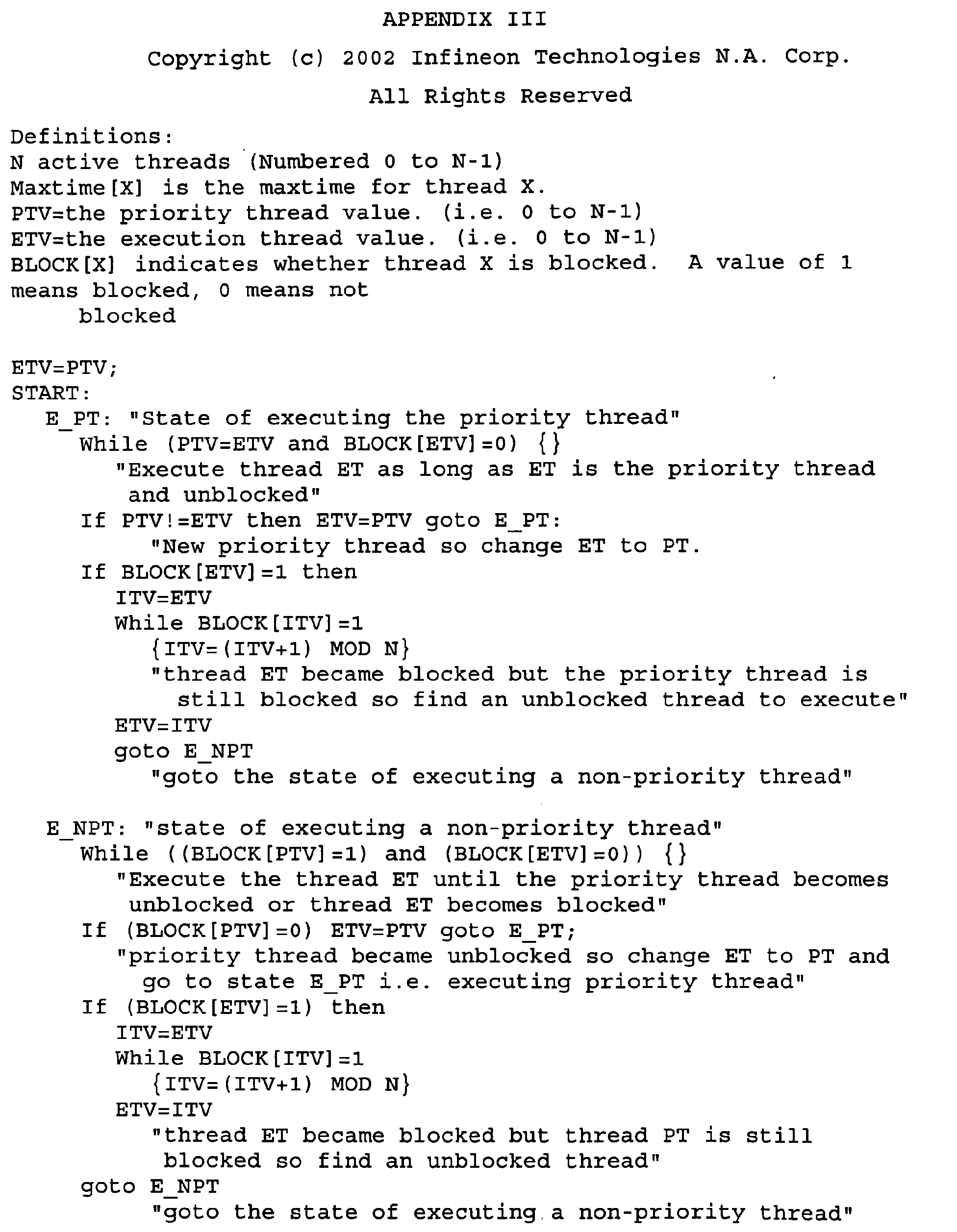

## Claims

**1.** A thread selection unit for a multithreaded processor having a plurality of active threads, the thread selection unit comprising:
a priority thread selector configured to generate a priority thread value associated with a priority thread;
an execution thread selector coupled to receive the priority thread value and to generate an execution thread value associated with a execution thread.

**2.** The thread selection unit of Claim 1, wherein the execution thread selector is configured to select the priority thread as the execution thread when the priority thread is unblocked.

**3.** The thread selection unit of Claim 1, wherein the priority thread selector selects the priority thread without regards to the actions of the execution thread selector.

**4.** The thread selection unit of Claim 1, wherein the priority thread selector comprises a plurality of maxtime registers, wherein each active thread has an associated maxtime register.

**5.** The thread selection unit of Claim 4, wherein the priority thread selector further comprises a priority thread counter configured to provide the priority thread value to the execution thread selector.

**6.** The thread selection unit of Claim 5, wherein plurality of maxtime registers provides a maxtime value corresponding to the priority thread value.

**7.** The thread selection unit of Claim 6, wherein the priority thread selector further comprises:
a counter; and
a comparator coupled to the counter and the plurality of maxtime registers, wherein the comparator is configured to compare a count value of the counter with the maxtime value from the plurality of maxtime registers.

**8.** The thread selection unit of Claim 7, wherein the priority thread counter is incremented and the counter is reset when the count value equals the maxtime value.

**9.** The thread selection unit of Claim 4, wherein the priority thread selector further comprises an internal thread counter configured to provide an internal thread value to the maxtime registers.

**10.** The thread selection unit of Claim 9, wherein plurality of maxtime registers provides a maxtime value corresponding to the internal thread value.

**11.** The thread selection unit of Claim 10, wherein the priority thread selector further comprises:
a counter; and
a comparator coupled to the counter and the plurality of maxtime registers, wherein the comparator is configured to compare a count value of the counter with the maxtime value from the plurality of maxtime registers.

**12.** The thread selection unit of Claim 11, wherein the internal thread counter is incremented and the counter is reset when the count value equals the maxtime value.

**13.** The thread selection unit of Claim 11, wherein the priority thread counter is incremented and the counter is reset when the maxtime value equals zero.

**13.** The thread selection unit of Claim 12, wherein the priority thread selector further comprises a priority thread register configured to receive the internal thread value and the provide the priority thread value, wherein the priority thread registers stores the internal thread value when the maxtime value is not equal to zero.

**14.** The thread selection unit of Claim 1, wherein the execution thread selector comprises:
a thread block checker configured to provide a plurality of block values, wherein each active thread has a corresponding block value;
an execution thread register configured to provide the execution thread value; and
a comparator configured to compare the priority thread value with the execution thread value and to generate a comparison result.

**15.** The thread selection unit of Claim 1, wherein the execution thread selector further comprises a controller coupled to receive the block values, the priority thread value, the comparison result, and the execution thread value and configured to generate a next execution thread value for the execution thread register.

**16.** The thread selection unit of Claim 15, wherein the controller generates the next execution thread value to be equal to the priority thread value when the priority thread is not blocked.

**17.** The thread selection unit of Claim 16, wherein the controller generates the next execution thread value to not be equal to the priority thread value when the priority thread is blocked.

**18.** A method of selecting an execution thread from a plurality of active threads in a multithreaded processor, the method comprising:
selecting a priority thread;
selecting the priority thread as the execution thread, when the priority thread is unblocked.

**19.** The method of Claim 18 further comprising selecting a non-priority thread as the execution thread when the priority thread is blocked.

**20.** The method of Claim 19, wherein the selecting a priority thread comprises:
assigning a maxtime value for each active thread;
selecting a next thread as the priority thread when the priority thread has been the priority thread for a maxtime number of cycles.

**21.** The method of Claim 20, wherein the selecting a next thread as the priority thread when the priority thread has been the priority thread for a maxtime number of cycles comprises:
incrementing a priority thread counter when a count value equals the maxtime value corresponding to the priority thread; and
resetting a counter when the count value equals the maxtime value corresponding to the priority thread.

**22.** The method of Claim 20, wherein the selecting a next thread as the priority thread when the priority thread has been the priority thread for a maxtime number of cycles comprises:
incrementing an internal thread counter when a count value equals the maxtime value corresponding to a internal thread value;
resetting a counter when the count value equals the maxtime value corresponding to the priority thread; and
setting a priority thread value equal to the internal thread value when the maxtime value corresponding to the internal thread value is not equal to zero.

**23.** A thread selection unit for selecting an execution thread from a plurality of active threads in a multithreaded processor, the thread selection unit comprising:
means for selecting a priority thread;
means for selecting the priority thread as the execution thread, when the priority thread is unblocked.

**24.** The thread selection unit of Claim 23 further comprising means for selecting a non-priority thread as the execution thread when the priority thread is blocked.

**25.** The thread selection unit of Claim 24, wherein the means for selecting a priority thread comprises:
means for assigning a maxtime value for each active thread;
means for selecting a next thread as the priority thread when the priority thread has been the priority thread for a maxtime number of cycles.

**26.** The thread selection unit of Claim 25, wherein the means for selecting a next thread as the priority thread when the priority thread has been the priority thread for a maxtime number of cycles comprises:
means for incrementing a priority thread counter when a count value equals the maxtime value corresponding to the priority thread; and
means for resetting a counter when the count value equals the maxtime value corresponding to the priority thread.

**27.** The thread selection unit of Claim 25, wherein the means for selecting a next thread as the priority thread when the priority thread has been the priority thread for a maxtime number of cycles comprises:
means for incrementing an internal thread counter when a count value equals the maxtime value corresponding to a internal thread value;
means for resetting a counter when the count value equals the maxtime value corresponding to the priority thread; and
means for setting a priority thread value equal to the internal thread value when the maxtime value corresponding to the internal thread value is not equal to zero.
